(19) Europäisches Patentamt

European Patent Office

Office européen des brevets

(11) **EP 4 518 072 A1**

(12) **EUROPEAN PATENT APPLICATION**

(43) Date of publication:
05.03.2025  Bulletin 2025/10

(21) Application number: 23194813.4

(22) Date of filing: 01.09.2023

(51) International Patent Classification (IPC):
*H02J 3/32* $^{(2006.01)}$   *H02J 7/00* $^{(2006.01)}$

(52) Cooperative Patent Classification (CPC):
H02J 3/32; H02J 7/0024; H02J 7/007192

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Rimac Technology LLC
10431 Sveta Nedelja (HR)

(72) Inventors:
• Huang, Zexin
  Loughborough (GB)
• Parry, Daniel
  Faringdon, SN7 7HY (GB)
• Khah, Nasrin Shahed
  10000 Zagreb (HR)

(74) Representative: Hoffmann Eitle
Patent- und Rechtsanwälte PartmbB
Arabellastraße 30
81925 München (DE)

(54) **CONTROLLING AN ENERGY STORAGE SYSTEM**

(57)    A method for controlling an energy storage system, the method comprising the steps of: a) obtaining information related to a state of the energy storage system; b) determining a control action for controlling the energy storage system; c) evaluating a cost function using the control action and the information; d) determining whether the evaluated cost function has reached a minimum; and e) if the evaluated cost function has reached the minimum, applying the control action to the energy storage system; if the evaluated cost function has not reached the minimum, adjusting the control action on the basis of the evaluated cost function and repeating step c) using the adjusted control action.

FIG. 1

EP 4 518 072 A1

**Description**

Technical field

The present invention relates to controlling an energy storage system, specifically to determining and applying a control action for controlling the energy storage system.

Technical background

In view of technological upheavals, controlling energy storage systems, such as batteries, in particular AC batteries, that are part of the energy grid, is an emergent field of great importance. Many of these energy storage systems can be and are required to be controlled by a scheduling algorithm such that the power stored can be provided according to the demands, i.e., the power output.

Important aspects for such scheduling algorithms are the performance and the safety of the controlled energy storage system. Both aspects are closely related to the temperature of the energy storage system. While it is difficult to control the thermal gradient of a DC battery, any energy storage system having a switching mechanism allows to control the temperature of the energy storage system, for example by bringing in modules, bypassing individual modules or reducing the output of individual modules of the energy storage system .

During the operation of an energy storage system, modules may have different temperatures and thermal gradients due to energy source variations, poor balancing, and etc. This may affect the performance and safety of the whole system significantly. Power and capacity of the individual energy sources provided in the energy storage system may degrade rapidly when they are operated or stored at too high temperatures, for example, temperatures of 50 degrees Celsius or more. This can lead to various failure modes including thermal runaway. On the other hand, low temperatures, especially during charging, may also be detrimental as they lead to lithium plating and dendrite growth.

One challenge in addressing these aspects is that predicting the temperature accurately in a high frequency switching scenario is difficult. This is even more so, when also considering cooling effects. Further, controlling the energy storage system also needs to consider both temperature and power demand.

Accordingly, there is a need for a method of controlling the energy storage system that allows to take into account the above aspects such that an improved performance of a safer energy storage system can be obtained.

Summary

The above problems, among others, are solved by the subject-matter of the independent claims. Preferred embodiments are given by the subject-matter of the dependent claims.

According to an embodiment of the present invention, there is provided a method for controlling an energy storage system, the method comprising the steps of: a) obtaining information related to a state of the energy storage system; b) determining a control action for controlling the energy storage system; c) evaluating a cost function using the control action and the information; d) determining whether the evaluated cost function has reached a minimum; and e) if the evaluated cost function has reached the minimum, applying the control action to the energy storage system; if the evaluated cost function has not reached the minimum, adjusting the control action on the basis of the evaluated cost function and repeating step c) using the adjusted control action.

According to another embodiment of the present invention, there is provided a device for controlling an energy storage system, the device configured to: a) obtain information related to a state of the energy storage system; b) determine a control action for controlling the energy storage system; c) evaluate a cost function using the control action and the information; d) determine whether the evaluated cost function has reached a minimum; and e) if the evaluated cost function has reached the minimum, apply the control action to the energy storage system; if the evaluated cost function has not reached the minimum, adjust the control action on the basis of the evaluated cost function and repeat step c) using the adjusted control action.

According to a further embodiment of the present invention, there is provided an energy storage system configured to: a) obtain information related to a state of the energy storage system; b) determine a control action for controlling the energy storage system; c) evaluate a cost function using the control action and the information; d) determine whether the evaluated cost function has reached a minimum; and e) if the evaluated cost function has reached the minimum, apply the control action to the energy storage system; if the evaluated cost function has not reached the minimum, adjust the control action on the basis of the evaluated cost function and repeat step c) using the adjusted control action.

## Brief description of the drawings

Embodiments of the present invention, which are presented for better understanding the inventive concepts, but which are not to be seen as limiting the invention, will now be described with reference to the figures in which:

Figure 1     shows a flowchart of a method according to an embodiment of the present invention;

Figure 2     shows a device embodiment of the present invention;

Figure 3     shows a schematic energy source model;

Figure 4     shows a schematic energy source model;

Figure 5     shows a schematic thermal module model including a cooling system and a busbar; and

Figure 6     shows a schematic block diagram of a multilevel converter.

## Detailed description

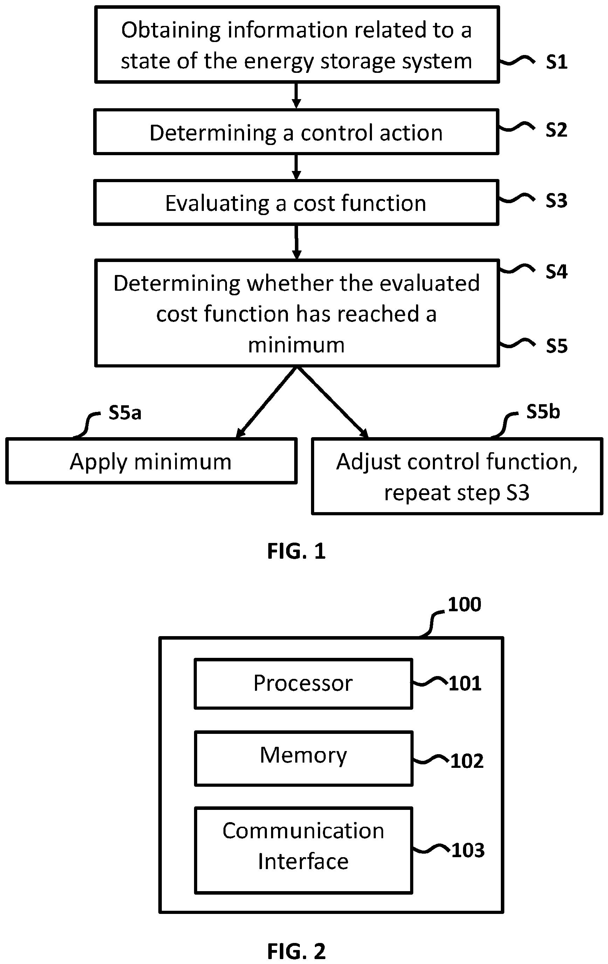

Figure 1 shows a flowchart of a method according to an embodiment of the present invention. A method for controlling an energy storage system, the method comprising the steps of: a) obtaining information related to a state of the energy storage system (step S1); b) determining a control action for controlling the energy storage system (step S2); c) evaluating a cost function using the control action and the information (step S3); d) determining whether the evaluated cost function has reached a minimum (step S4); and e) if the evaluated cost function has reached the minimum, applying the control action to the energy storage system (step S5a); if the evaluated cost function has not reached the minimum, adjusting the control action on the basis of the evaluated cost function and repeating step c) using the adjusted control action (step S5b).

In other words, the present invention can be understood as being directed at controlling and/or scheduling the energy storage system in accordance with an assessment whether a control action provides an optimal solution, i.e., the cost function has reached a minimum, and iteratively adjusting the control action until such an optimal solution is found.

In an embodiment according to the present disclosure, the control action may be determined along a control horizon. This control horizon may be a sliding window and may have a duration of 15 minutes. The value of 15 minutes is merely an example and not to be construed as limiting; in fact, other values may be chosen as well. A sliding window can be understood as removing, in each iteration, the first value and adding a (new) last value.

In an embodiment according to the present disclosure, the evaluation of the cost function may include evaluating a power demand predicted along the control horizon. Here, power demand may correspond to the electric power, i.e., the current to be provided by the energy storage system.

In an embodiment according to the present disclosure, the control action determined in step b) may be based on the information obtained in step a).

Indeed, the above discussion can be understood as follows: Step a) obtains information about the system, which also includes information about the individual components of the energy storage system discussed elsewhere in this document.

Step b) then determines an (initial) control action.

Steps c) to e) then are an iterative search for an optimal solution by evaluating a cost function in step c), determinising whether a minimum is reached in step d) and either applying the control action or adjusting the control action and starting another iteration in step e).

Hence, the obtained information and the final control action may be linked by the repetition of steps c) and d) as here the control action is adjusted and said adjustment is influenced, via the evaluation of the cost function, by the obtained information.

Steps c) to e) may thus be understood as a (numerical) optimization. In this context, determining whether a minimum is reached can for example be done by comparing whether a current iteration contains any improvement compared to previous iterations or not. Further, adjusting the control action may be implemented by comparing different control actions of different iterations and the associated values of the evaluated cost function to determine how to adjust the current control action.

In an embodiment according to the present disclosure, the control action may have at least one of a lower control action limit and an upper control action limit.

These control action limits, in particular the upper control action limit, may serve as a safety measure such that the resulting control action does not lead to a discharge of power potentially leading to damage to the energy storage system or its components.

In an embodiment according to the present disclosure, the minimum may be a local minimum, a global minimum or an approximate minimum. In other words, this term is not particularly limited to a specific type of "minimum" and accordingly the methods involved to obtain this minimum are not particularly limited as well.

In an embodiment according to the present disclosure, in step e) the control action may also be applied to the energy storage system if a stopping criterion is satisfied. This may be understood that the repetition of step c) is terminated and hence serves to ensure that the method terminates with a definite control action applied to the energy storage system.

In an embodiment according to the present disclosure, the stopping criterion may be at least one of reaching a maximum number of iterations of step c), falling below a minimum difference between evaluated cost functions of two subsequent iterations of step c), a total computation time of the performed method, falling below a minimum difference between two subsequent iterations of the control action.

Taken together, methods according to the present disclosure can be understood as relating to using concepts such as Model Predictive Control (MPC). MPC is a control algorithm that uses a model of a dynamic system to make predictions about its future behavior and then optimizes control actions to achieve a desired objective, i.e., minimizes a cost function representing the desired objective.

Within the present disclosure, a control action relates to an action controlling the power provided by the energy storage system. A control action may encompass or be conduction rules and/or conduction times of the energy storage system.

Figure 2 shows a device embodiment of the present invention. This device can be, for example, a microcontroller such as a microcontroller as part of a battery management system. The device 100 may comprise a processor 101, a memory 102 as well as a communication interface 103. The memory 102 may store code or may have access to code that instructs the processor 101 to perform the steps of any method embodiment of the present invention as elaborated above. The communication interface 103 may be adapted for receiving communication data over a network. The network may be wired or wireless network.

The device 100 can generally be a computer, an electronic control unit (ECU), etc.

The processor 101 may be embodied by one or more processing units, such as a central processing unit (CPU), or may also be provided by a microcontroller unit (MCU).

The memory 102 which can be embodied by local memory which may include but not limited to, a read-only memory (ROM), a random-access memory (RAM), a programmable read-only memory (PROM) and an electrically erasable programmable read-only memory (EEPROM).

The communication interface 103 may be adapted for providing and/or receiving data from the processor 101 and for providing and/or receiving data from the memory 102 over a communication network. The communication network may be a wired or a wireless network.

The device 100 may be for controlling an energy storage system and may be configured to: a) obtain information related to a state of the energy storage system; b) determine a control action for controlling the energy storage system; c) evaluate a cost function using the control action and the information; d) determine whether the evaluated cost function has reached a minimum; and e) if the evaluated cost function has reached the minimum, apply the control action to the energy storage system; if the evaluated cost function has not reached the minimum, adjust the control action on the basis of the evaluated cost function and repeat step c) using the adjusted control action.

Alternatively, the device 100 schematically shown in Figure 2 might be the energy storage that is configured to: a) obtain information related to a state of the energy storage system; b) determine a control action for controlling the energy storage system; c) evaluate a cost function using the control action and the information; d) determine whether the evaluated cost function has reached a minimum; and e) if the evaluated cost function has reached the minimum, apply the control action to the energy storage system; if the evaluated cost function has not reached the minimum, adjust the control action on the basis of the evaluated cost function and repeat step c) using the adjusted control action.

In an embodiment according to the present disclosure, the energy storage system may comprise at least one module, wherein the control action may be determined for each of the at least one module, and wherein the control action may relate to conduction times of the at least one module. Accordingly, applying the control action to the modules reflects the energy storage system as a whole.

Moreover, the control action may relate to bypassing and/or reducing the energy output of at least one module. Herein, bypassing a module is understood as not using said module or at least not using said module completely. This may be done for a period of time. As the control action can be understood as a function of time, bypassing a module for a period of time can thus be understood as not using this module for said period of time or as at least not using said module completely for said period of time.

More specifically, if the module is comprised of at least one energy source, bypassing the module may include bypassing individual energy sources of said module.

Alternatively or in addition to bypassing, control of the energy storage system, the module and/or the energy source may include reducing the energy output of the individual constituents or larger parts of the energy storage systems, i.e., reducing the energy output of individual modules or individual energy sources. This may in particular be advantageous to prevent overheating of individual energy sources or modules.

In a preferred embodiment according to the present disclosure, the conduction times and/or conduction rules relate to the modules. In this sense, "conduction times of the energy storage system" may be understood as "conduction times of the modules comprised in the energy storage system".

In an embodiment according to the present disclosure, each module may comprise at least one energy source. Hence, the above terms "conduction time", "conduction rule", and "control action" when referring to the energy storage system as a whole may equally refer to the energy sources of the energy storage system, i.e., "conduction times of the energy storage system" may be understood as "conduction times of the energy sources comprised in the energy storage system".

In an embodiment according to the present disclosure, the cost function may be a function of a temperature of the energy storage system.

In an embodiment according to the present disclosure, the temperature may be a predicted temperature.

In an embodiment according to the present disclosure, the temperature of the energy storage system may be calculated using a spatially discretized heat transfer equation, resulting in a plurality of spatially discretized temperature values.

In an embodiment according to the present disclosure, the cost function may be a variance of the plurality of spatially discretized temperature values. This choice of the cost function helps to avoid overheating as well as too low temperatures as it "drives" the temperature distribution towards a uniform temperature distribution, thus avoid "temperature spikes".

In an embodiment according to the present disclosure, the temperature of the energy storage system may have at least one of a lower temperature limit and an upper temperature limit. This helps to avoid overheating as well as too low temperatures, thus further contributing to the safety and overall performance of the energy storage system.

In an embodiment according to the present disclosure, the energy storage system may comprise at least one energy source and at least one power converter module.

In an embodiment according to the present disclosure, the energy storage system may be a multilevel converter comprising a plurality of energy sources and a plurality of power converter modules, each power converter module comprising at least two switching elements. In such an embodiment, the control action may relate to bypassing and/or reducing the energy output of at least one energy source.

In an embodiment according to the present disclosure, the information may comprise at least one of a terminal voltage of the energy storage system, a current of the energy storage system, an ambient temperature of the energy storage system, and a state of charge of the energy storage system. Herein, the state of charge is an estimated quantity, while the remaining quantities may be measured quantities, but may also be based on estimations/calculations.

Further, these quantities may be obtained on the level of the energy storage system, on the level of the modules comprised in the energy storage or on the level of the energy sources comprised in the modules.

For example, and as a further clarification, "a state of charge of the energy storage system" may be understood as the state of charge of the whole energy storage system, i.e., all its modules and all energy sources of all modules but may encompass the state of charge of a single module of the energy storage system as well as the state of charge of a single energy source of a single module of the energy storage system.

In an embodiment according to the present disclosure, the energy storage system may be configured to provide at least one of a current of arbitrary wave form, an alternating current, a pulsating direct current, and direct current. In other words, the current provided by the energy storage system is not particularly limited but may provide a current according to the specific demand.

In case that the energy storage system also comprises at least one power converter module, it may be understood that the combination of the modules and the at least one power converter module provide the current.

Moreover, the current provided may be synthesized from a combination of DC current and AC current.

In an embodiment according to the present disclosure, the energy storage system may be provided in a vehicle or is a stationary energy storage system, for example, connected to an energy grid.

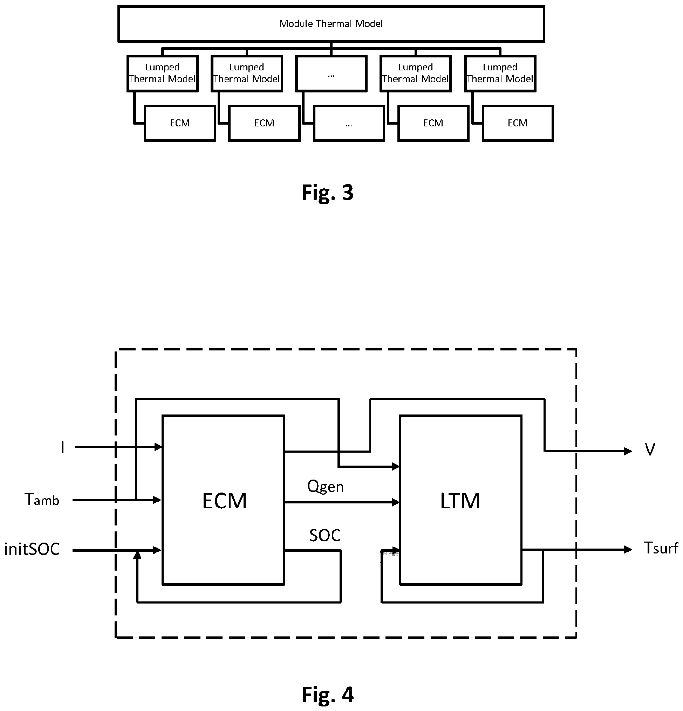

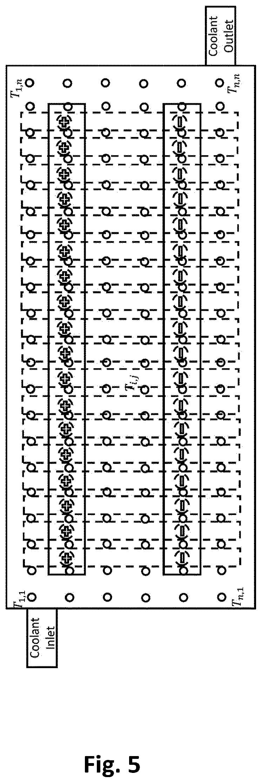

In the following, also with reference to Figures 3, 4 and 5, an embodiment according to the present invention will be described. Figure 3 shows a schematic energy source model, while Figure 4 shows a schematic energy source model and Figure 5 shows a schematic thermal module model including a cooling system and a busbar.

In this embodiment, the energy storage system comprises a plurality of modules, each module comprising a plurality of energy sources. In the context of the present disclosure, energy source may relate to any kind of energy source and includes, for example, a battery, a capacitive energy source, photovoltaic (PV) cells, fuel cells or electromechanical power converters. While the present embodiment will be discussed in close relation of the energy source being a battery, it should thus be understood that the present disclosure is not limited thereto, and the concepts discussed herein apply to any energy source.

Figure 3 shows a module thermal model, i.e., a thermal model used for modelling each of the energy

storage system. This model is based on a Lumped Thermal Model (LTM) and an Equivalent Circuit Model (ECM) coupled together for each energy source of the module. The ECM can be understood as replacing the circuit with a theoretical model to simplify the modelling. The LTM can be understood as a space-discretization of the underlying model to determine the dynamics numerically. This may be combined with a Finite Difference Method (FDM) which is a time-discretization of the underlying model.

Figure 4 shows the model on this energy source level, namely how the LTM and the ECM are related to each other. Specifically, the ECM receives as input the current I, i.e., the power demand, the ambient temperature $T_{amb}$, and the initial state of charge of the energy source initSOC. Based on these quantities, the voltage V and the generated heat $Q_{gen}$ is determined, wherein is determined as

$$Q_{gen} = (U - OCV) \times I$$

where U is the energy source terminal voltage, that is, the voltage across the energy source, and ranges from positive to negative and OCV is the Open Circuit Voltage. Accordingly, the state of charge SOC can be updated. The ambient temperature $T_{amb}$ may be a measured temperature around the energy sources but may also be the temperature on the surface of energy sources of the energy storage system or some other equipment connected to the energy sources of the energy storage system such as, for example, a busbar. Further, the ambient temperature may also be determined, e.g., measured or estimated, based on these temperature measurements.

Based on this heat generation, the LTM can provide an estimate of the surface temperature $T_{surf}$. To this end, the LTM obtains, as input, the ambient temperature $T_{amb}$, the generated heat $Q_{gen}$ as well as an initial estimate of the surface temperature $T_{surf}$. This can, for example, be realized using the following equation:

$$C_s \frac{dT_{surf}}{dt} = Q_{gen} + (T_{amb} - T_{surf})/R_u$$

wherein $C_s$ and $R_u$ are parameters of the equation that can, for example, be obtained empirically.

Based on this energy source-level model for the temperature, a Module Thermal Model (MTM) as shown in Figure 5 provides an estimate of the temperature distribution across the module as a whole. This malso take into account the cooling system employed in the system.

In an embodiment, the spatially discretized heat transfer equation takes into account cooling effects taking place in the energy storage system. In other words, the heat transfer equation is not limited to include heat generation phenomena but may also include cooling phenomena, for example the fact that a coolant is present in the energy storage system.

As can be seen from Figure 5, the module has a coolant inlet and a coolant outlet as well as busbars for the energy sources provided in the module. The temperature is not uniformly distributed among the module as the coolant heats up once entering the module. This temperature distribution can be modelled by a two-dimensional heat equation

$$\frac{\partial^2 T}{\partial x^2} + \frac{\partial^2 T}{\partial y^2} + \frac{q}{k} = 0$$

where q represents the internal energy generation rate and k represents the thermal conductivity. Here, the internal energy generation rate may be an effective rate and may be a rate that considers both heating and cooling aspects. Further, as these heating and cooling aspects are not necessarily uniform across the energy storage system, the internal energy generation rate may be dependent on the position, i.e., q=q(x,y).

The partial derivatives of this partial differential equation can be approximated when discretizing the spatial coordinates x and y as indicated in Figure 5 by the dots. In other words, the temperature as a function of variables x and y, T(x,y), is replaced with a temperature $T_{m,n}$ with discrete variables m and n. Following this approximation, the partial derivatives can be written as

$$\left(\frac{\partial^2 T}{\partial x^2}\right)_{m,n} \simeq \frac{T_{m+1,n} - 2T_{m,n} + T_{m-1,n}}{(\Delta x)^2}$$

Taken together, the heat generated by the energy sources of the module and the temperature distribution within the module can be estimated, in particular not only at an instance of time but also for further time steps. Thus, for a given control action, the temperature for the module can be estimated and thus the control action can be evaluated using a cost function and adjusted if necessary.

Specifically, the cost function may be a function of the temperature since, as indicated above, one important parameter of energy storage systems is the temperature. More specifically, the cost function may be a variance of the temperature. Accordingly, the underlying optimization problem may be formulated as

$$\min_u J = \min_u \sum_{i=N_1}^{N_2} \sum_{all\ modules} \sum_{m,n} Var(T_{m,n}(u(i))$$

where "I" is in the interval $[N_1,N_2]$ and $N_1$ and $N_2$ define the beginning and the end of the horizon taken into account. Further, "u(i)" is the control action and "Var" indicates the variance. Here, the variance may be the variance per module. Accordingly, the cost function is a summation over all discretized points (m,n) of each module, over all modules and over the interval $[N_1,N_2]$. Clearly, the temperature distribution $T_{m,n}$ may be different for each module; however, in the above formula a specific index indicating this has been omitted for improved readability.

Additionally, this optimization may be subject to further constraints, specifically to at least one of

$$u_{min} \leq u(i) \leq u_{max}$$

and

$$T_{min} \leq T_{m,n}(i) \leq T_{max}$$

In other words, at least one of the control action u and the temperature distribution may be subject to lower and/or upper limits.

The above embodiment can also be understood as applying model predictive control to the energy storage system such that the variance of the temperature of the modules and energy sources of the energy storage system is minimized while providing the current according to the power demand.

From the above, it can be understood that embodiments according to the present disclosure provide control of an energy storage that not only achieve efficient and high performance of the energy storage but is also ensures safety of the energy storage system.

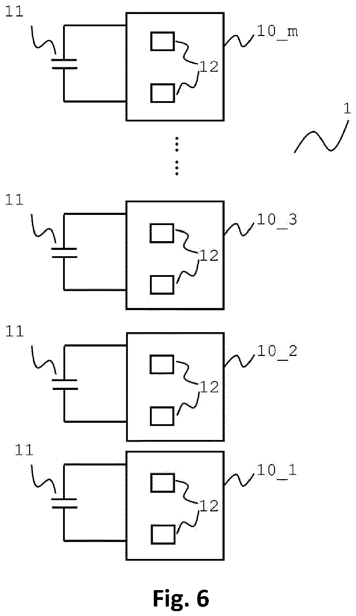

Further, Figure 6 shows a schematic block diagram of a multilevel converter 1 according to an embodiment of the present invention. This figure in particular serves to illustrate how the present invention may be applied to the case that a multilevel converter 1 is used as the energy storage system.

The multilevel converter 1 comprises a plurality of energy sources 11 and a plurality of power converter modules 10_1, 10_2, 10_3, ..., 10_i, ..., 10_m (i=1...m). Each power converter module 10_i may comprise at least two switching elements 12, but is not limited to comprising at least two switching elements. For example, four switching elements 12 may be used as well. Each one of the switching elements 12 may be a solid-state switching element, like for example a two terminal solid-state switch or a three terminal solid-state switch. Examples of two-terminal solid-state switch include, without limiting the present invention, a PIN (positive-intrinsic-negative) diode and a Schottky diode. Examples of a three-terminal solid-state switch include, without limiting the present invention, MOSFET, JFET, IGBT, BJT and thyristor.

It is to be understood that even though figure 6 shows each energy source 11 as being connected to a respective one of the power converter modules 10_1, 10_2, 10_3, ..., 10_m, this is not limiting, and other connecting configurations are also possible. The energy source 11 may be any kind of energy source, like for example a battery, a photovoltaic cell, a fuel cell, an electromechanical power converter or a capacitive energy source. It is further to be understood that the present invention is not limited to a specific topology of the multilevel converter 1. For example, the power converter modules 10_1, 10_2, 10_3, ..., 10_m may be connected in a string and a plurality of such strings may be provided in the multilevel converter 1. Each string may have an input terminal and an output terminal. Each string may represent a phase or an arm of the multilevel converter 1.

By switching the switching elements 12 of the module 10_i, conduction of the energy source 11 of said module 10_i can be controlled, i.e., the module 10_i can be controlled to be in a conduction state or in a non-conduction state. Thus, a control action may control the conduction times and/or conduction rules by controlling the switching elements 12.

The non-conduction state of the at least one power converter module 10_i does not necessarily mean that for the at least one power converter module 10_i which is in a non-conduction state each element of the power converter module 10_i is in a non-conduction state. For example, when the at least one power converter module 10_i is in the non-conduction state, at least one of the two switching elements 12 of the power converter module 10_i may be in a conduction state to thereby bypass the energy source 11 connected to the power converter module 10_i. The at least one power converter module 10_i being in a non-conduction state may be understood therefore as the at least one power converter module 10_i not (actively) contributing to the distribution of the energy conversion (workload, load) in the multilevel converter 1. The output signal of the at least one power converter module 10_i in the non-conduction state may have a value of 0V. Hence, the at least one power converter module 10_i being in a non-conduction state may not contribute to the generation of the required output voltage of the multilevel converter 1. Accordingly, the module 10_i being in a conduction state may be understood as a state in which the module contributes to the generation of the required output voltage of the multilevel converter 1.

Although detailed embodiments have been described, these only serve to provide a better understanding of the invention defined by the independent claims and are not to be seen as limiting to the present invention.

**Claims**

1. A method for controlling an energy storage system, the method comprising the steps of:

   a) obtaining information related to a state of the energy storage system;
   b) determining a control action for controlling the energy storage system;
   c) evaluating a cost function using the control action and the information;
   d) determining whether the evaluated cost function has reached a minimum; and
   e) if the evaluated cost function has reached the minimum, applying the control action to the energy storage system;
   if the evaluated cost function has not reached the minimum, adjusting the control action on the basis of the evaluated cost function and repeating step c) using the adjusted control action.

2. The method according to claim 1, wherein the energy storage system comprises at least one module, wherein the control action is determined for each of the at least one module, and wherein the control action preferably relates to conduction times of the at least one module.

3. The method according to claim 2, wherein the control action relates to bypassing and/or reducing the energy output of at least one module.

4. The method according to any one of claims 1 to 3, wherein the cost function is a function of a temperature of the energy storage system, wherein preferably the temperature is a predicted temperature.

5. The method according to claim 4, wherein the temperature of the energy storage system is calculated using a spatially discretized heat transfer equation, resulting in a plurality of spatially discretized temperature values, wherein preferably the cost function is a variance of the plurality of spatially discretized temperature values.

6. The method according to claim 4 or 5, wherein the spatially discretized heat transfer equation takes into account cooling effects taking place in the energy storage system.

7. The method according to any one of claims 1 to 6, wherein the energy storage system is a multilevel converter comprising a plurality of energy sources and a plurality of power converter modules, each power converter module comprising at least two switching elements.

8. The method according to claim 7, wherein the control action relates to bypassing and/or reducing the energy output of at least one energy source.

9. The method according to any one of claims 1 to 7, wherein the information comprises at least one of a terminal voltage of the energy storage system, a current of the energy storage system, an ambient temperature of the energy storage system, and a state of charge of the energy storage system.

10. The method according to any one of claims 1 to 9, wherein the control action is determined along a control horizon, wherein preferably the evaluation of the cost function includes evaluating a power demand predicted along the control horizon.

11. The method according to any one of claims 1 to 10, wherein the control action determined in step b) is based on the information obtained in step a).

12. The method according to any one of claims 1 to 11, wherein in step e) the control action is also applied to the energy storage system if a stopping criterion is satisfied.

13. The method according to claim 12, wherein the stopping criterion is at least one of reaching a maximum number of iterations of step c), falling below a minimum difference between evaluated cost functions of two subsequent iterations of step c), a total computation time of the performed method, falling below a minimum difference between two subsequent iterations of the control action.

14. A device for controlling an energy storage system, the device configured to:

   a) obtain information related to a state of the energy storage system;
   b) determine a control action for controlling the energy storage system;
   c) evaluate a cost function using the control action and the information;
   d) determine whether the evaluated cost function has reached a minimum; and
   e) if the evaluated cost function has reached the minimum, apply the control action to the energy storage system;
   if the evaluated cost function has not reached the minimum, adjust the control action on the basis of the evaluated cost function and repeat step c) using the adjusted control action.

15. An energy storage system configured to:

   a) obtain information related to a state of the energy storage system;
   b) determine a control action for controlling the energy storage system;
   c) evaluate a cost function using the control action and the information;
   d) determine whether the evaluated cost function has reached a minimum; and
   e) if the evaluated cost function has reached the minimum, apply the control action to the energy storage system;
   if the evaluated cost function has not reached the minimum, adjust the control action on the basis of the evaluated cost function and repeat step c) using the adjusted control action.

```
┌──────────────────────────────────┐
│  Obtaining information related to a  │  ⌇ S1
│  state of the energy storage system  │
└──────────────────────────────────┘
                │
                ▼
┌──────────────────────────────────┐
│      Determining a control action     │  ⌇ S2
└──────────────────────────────────┘
                │
                ▼
┌──────────────────────────────────┐
│      Evaluating a cost function       │  ⌇ S3
└──────────────────────────────────┘
                │
                ▼
┌──────────────────────────────────┐
│  Determining whether the evaluated   │  ⌇ S4
│    cost function has reached a        │
│            minimum                    │  ⌇ S5
└──────────────────────────────────┘
          ╱              ╲
   S5a   ╱                ╲   S5b
┌──────────────────┐  ┌──────────────────────┐
│  Apply minimum    │  │  Adjust control function, │
│                   │  │     repeat step S3        │
└──────────────────┘  └──────────────────────┘
```

**FIG. 1**

```
                              ⌐ 100
┌────────────────────────────────────┐
│                                      │
│   ┌──────────────────────┐           │
│   │      Processor        │ ⌇ 101     │
│   └──────────────────────┘           │
│                                      │
│   ┌──────────────────────┐           │
│   │       Memory          │ ⌇ 102     │
│   └──────────────────────┘           │
│                                      │
│   ┌──────────────────────┐           │
│   │    Communication      │ ⌇ 103     │
│   │      Interface        │           │
│   └──────────────────────┘           │
│                                      │
└────────────────────────────────────┘
```

**FIG. 2**

**Fig. 3**

**Fig. 4**

**Fig. 5**

11 10_m
12
1

11 10_3
12

11 10_2
12

11 10_1
12

**Fig. 6**

Europäisches
Patentamt

European
Patent Office

Office européen
des brevets

# EUROPEAN SEARCH REPORT

**Application Number**

EP 23 19 4813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/075254 A1 (CHANG HSIN-YUAN [TW] ET AL) 17 March 2016 (2016-03-17) * paragraphs [0027] - [0048]; figures 1-4 * | 1-15 | INV. H02J3/32 H02J7/00 |
| A | GB 2 537 616 A (UPGRADE TECH ENG LTD [GB]) 26 October 2016 (2016-10-26) * the whole document * | 1-15 | |
| A | US 11 687 052 B2 (BLUE HORIZONS INNOVATIONS LLC [US]) 27 June 2023 (2023-06-27) * the whole document * | 1-15 | |
| A | WO 2017/215965 A1 (BLUE SOLUTIONS [FR]) 21 December 2017 (2017-12-21) * the whole document * | 1-15 | |

**TECHNICAL FIELDS SEARCHED (IPC)**

H02J
B60L

The present search report has been drawn up for all claims

| Place of search | Date of completion of the search | Examiner |
|---|---|---|
| Munich | 6 March 2024 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 4813

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | | Publication date | Patent family member(s) | | Publication date |
|---|---|---|---|---|---|---|
| US 2016075254 | A1 | | 17-03-2016 | CA | 2911036 A1 | 06-11-2014 |
| | | | | CN | 105324677 A | 10-02-2016 |
| | | | | EP | 2993483 A1 | 09-03-2016 |
| | | | | JP | 6185150 B2 | 23-08-2017 |
| | | | | JP | 2016524435 A | 12-08-2016 |
| | | | | KR | 20160003194 A | 08-01-2016 |
| | | | | TW | 201443794 A | 16-11-2014 |
| | | | | US | 2016075254 A1 | 17-03-2016 |
| | | | | WO | 2014177063 A1 | 06-11-2014 |
| GB 2537616 | A | | 26-10-2016 | CN | 107683222 A | 09-02-2018 |
| | | | | EP | 3286035 A1 | 28-02-2018 |
| | | | | GB | 2537616 A | 26-10-2016 |
| | | | | US | 2018099579 A1 | 12-04-2018 |
| | | | | WO | 2016170314 A1 | 27-10-2016 |
| US 11687052 | B2 | | 27-06-2023 | EP | 4121991 A2 | 25-01-2023 |
| | | | | US | 2022382240 A1 | 01-12-2022 |
| | | | | WO | 2021247117 A2 | 09-12-2021 |
| WO 2017215965 | A1 | | 21-12-2017 | AU | 2017284988 A1 | 13-12-2018 |
| | | | | BR | 112018076120 A2 | 26-03-2019 |
| | | | | CA | 3024833 A1 | 21-12-2017 |
| | | | | CN | 109804521 A | 24-05-2019 |
| | | | | EP | 3472910 A1 | 24-04-2019 |
| | | | | FR | 3052928 A1 | 22-12-2017 |
| | | | | IL | 263553 A | 31-03-2019 |
| | | | | JP | 2019520020 A | 11-07-2019 |
| | | | | KR | 20190018169 A | 21-02-2019 |
| | | | | RU | 2019100709 A | 16-07-2020 |
| | | | | SG | 11201810545R A | 30-01-2019 |
| | | | | US | 2020269715 A1 | 27-08-2020 |
| | | | | WO | 2017215965 A1 | 21-12-2017 |

EPO FORM P0459

For more details about this annex : see Official Journal of the European Patent Office, No. 12/82